Europäisches Patentamt

European Patent Office

Office européen des brevets

(11) Publication number: **0 171 489**
**A1**

# (12) EUROPEAN PATENT APPLICATION

(21) Application number: **85100142.0**

(22) Date of filing: **08.01.85**

(51) Int. Cl.⁴: **H 02 H 7/00**

(30) Priority: **28.01.84 DE 3402954**

(43) Date of publication of application:
**19.02.86 Bulletin 86/8**

(84) Designated Contracting States:
**AT BE CH DE FR GB IT LI LU NL SE**

(71) Applicant: **AEG - Elotherm GmbH**
**Hammesberger Strasse 31**
**D-5630 Remscheid-Hasten(DE)**

(72) Inventor: **Eisenberg, Wilfried, Ing. grad.**
**Sedanstrasse 10**
**D-5630 Remscheid(DE)**

(72) Inventor: **Zok, Edmund, Dipl.-Ing.**
**Albert-Einstein-Strasse 13**
**D-5630 Remscheid(DE)**

(74) Representative: **Patentanwaltsbüro Cohausz & Florack**
**Schumannstrasse 97**
**D-4000 Düsseldorf 1(DE)**

(54) **Overcurrent detection for a direct current generator with controlled rectifier.**

(57) Die Erfindung bezieht sich auf eine Überstromüberwachung bei einem Gleichstromgenerator mit gesteuertem Gleichrichter (2), insbesondere für die elektrochemische Metallbearbeitung. Zur Erfassung von der Last (7, 8) zugeführtem Überstrom ist ein Komparator (11, 12) vorgesehen, der ein Abschaltsignal liefert, sobald der der Last zugeführte Strom einen Vergleichswert erreicht. Der Vergleichswert wird von einem Signalgeber (13) in Abhängigkeit von der Aussteuerung des Gleichrichters (2) geliefert. Der Signalgeber 13 berücksichtigt in dem Vergleichsignal den Zusammenhang zwischen der Form des der Last (7, 8) zugeführten Stromes und der Aussteuerung des Gleichrichters (2), sodaß einerseits der Last ein Strom mit einem arithmetischen Mittelwert zugeführt wird, bei dem eine optimale Bearbeitung gewährleistet ist, und andererseits der für die Abschaltung maßgebende Vergleichswert des Stromes der Stromform angepaßt ist.

Fig.1

## Überstromerfassung bei einem Gleichstromgenerator mit gesteuertem Gleichrichter

Die Erfindung bezieht sich auf eine Einrichtung zur Überwachung des von einem Wechselstrom -, insbesondere Dreiphasennetz über einen gesteuerten Gleichrichter einer Last zugeführten Stromes nach dem Oberbegriff des Patentanspruches.

Solche bekannten Einrichtungen (DE-OS 3032757) werden beispielsweise bei der elektrochemischen Metallbearbeitung (ECM) eingesetzt. Der vom Gleichrichter der ohmschen bis ohmsch-induktiven Last zugeführte Strom kann in Abhängigkeit von Arbeitsparametern (z.B. Arbeitsspannung, Arbeitsspaltgröße) eine unterschiedliche Welligkeit bei gleichem arithmetischem Mittelwert haben. Da aber der arithmetische Mittelwert für die Belastung der Elektrode und das Arbeitsergebnis bestimmend ist, gilt es, diesen arithmetischen Mittelwert bei der Abschaltung zu berücksichtigen. Die Berechnung des arithmetischen Mittelwertes durch Integration der Augenblickswerte bringt jedoch eine Verzögerung bis zur möglichen Abschaltung mit sich, die sich negativ hinsichtlich der Gefahr von Beschädigungen der Elektrode und der Qualität der Bearbeitung auswirken kann. Deshalb hat man bisher experimentell den zu einem zulässigen arithmetischen Mittelwert des Stromes passenden Maximalwert des Arbeitsstromes für bestimmte Betriebsparameter ermittelt. Sofern sich jedoch die Betriebsparameter ändern, entsprechen diese ermittelten Maximalwerte nicht mehr dem bei diesen geänderten Betriebsparametern optimalen arithmetischen Mittelwert des Stromes.

Der Erfindung liegt die Aufgabe zugrunde, die Einrichtung der eingangs genannten Art dahingehend zu verbessern, daß zum Schutz der Last unabhängig von sich ändernden Betriebsparametern die Abschaltung der Stromzufuhr zur Last sehr schnell bei Erreichen eines vorgegebenen arithmetischen Mittelwertes des der Last zugeführten Stromes erfolgt.

Diese Aufgabe wird erfindungsgemäß durch die im kennzeichnenden Teil des Patentanspruches 1 angegebenen Merkmale gelöst.

Bei der Erfindung erfolgt die Abschaltung des Gleichrichters in Abhängigkeit von dem Augenblickswert des der Last zugeführten Stromes unter Berücksichtigung der für den arithmetischen Mittelwert maßgebenden Stromform. Die Erfindung beruht auf der Erkenntnis, daß einerseits die Form des der Last zugeführten Stromes von der Ausgangsspannung des Gleichrichters und andererseits die Ausgangsspannung des Gleichrichters von der Steuerspannung des Gleichrichtersteuersatzes abhängen. Aufgrund dieser Abhängigkeiten ergibt sich für die Stromform und die Aussteuerung des Gleichrichters eine Kennlinie. Die Verwertung dieser Kennlinie im Signalgeber für das dem Komparator zuzuführende Vergleichssignal gewährleistet, daß bei gleichem eingestellten Mittelwert aber unterschiedlicher Stromform die Abschaltung in Abhängigkeit von dem Augenblickswert immer bei einem bestimmten Niveau relativ zum arithmetischen Mittelwert erfolgt. Mit anderen Worten: Es findet eine dynamische Anpassung des Abschaltpunktes an die jeweilige Stromform statt.

Sofern mehrere Lasten vorgesehen sind, ist für jede ein Komparator vorgesehen. Sofern die Lasten sich voneinander unterscheiden, sollte der Ausgang des Signalgebers über ein Korrekturglied mit dem jeweiligen Komparator verbunden sein, mit dem das Niveau des Vergleichswertes einstellbar ist. Mit dieser Ausgestaltung der Erfindung lassen sich unterschiedliche arithmetische Mittelwerte für die verschiedenen Lasten einstellen.

Im folgenden wird die Erfindung anhand einer Zeichnung näher erläutert. Im einzelnen zeigen

Figur 1    ein Schaltbild der Einrichtung,

Figur 2    ein Diagramm mit verschiedenen Formen des von dem Gleichrichter gelieferten Stromes bei gleichem arithmetischen Mittelwert dieses Stromes und

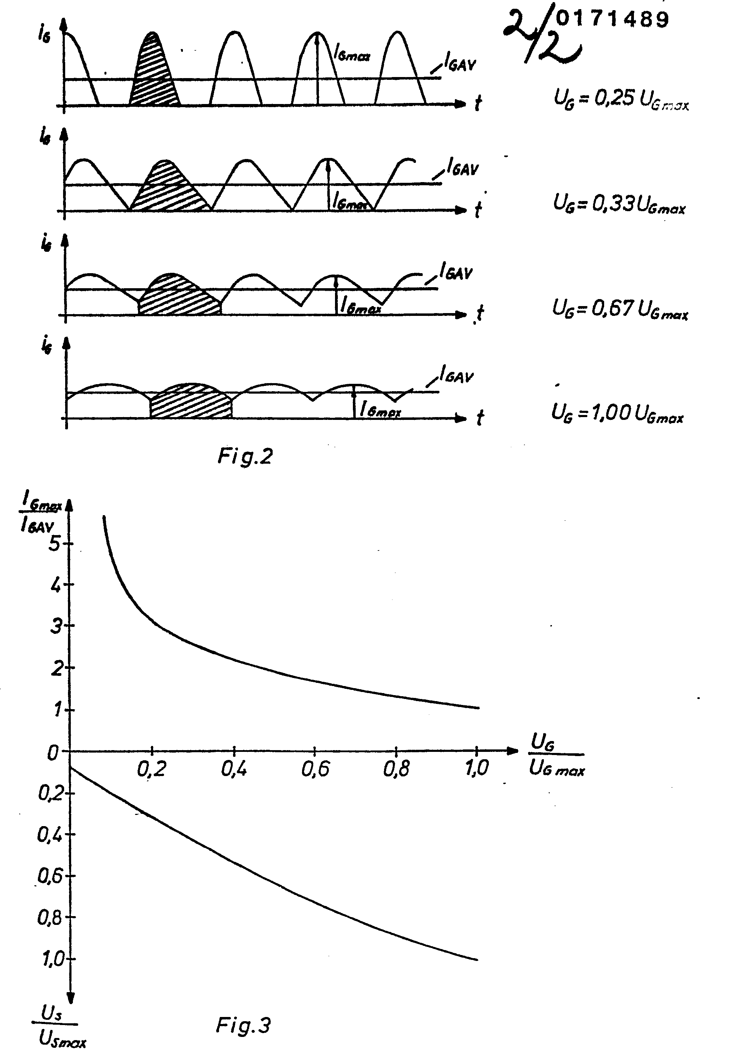

Figur 3    ein Diagramm für die Abhängigkeit des Spitzenwertes eines einer ohmschen bis ohmsch-induktiven Last zugeführten Gleichstromes ($I_{Gmax}$), normiert auf den arithmetischen Mittelwert dieses Stromes ($I_{GAV}$), von der Ausgangsspannung des Gleichrichters ($U_G$), normiert auf die maximale Ausgangsspannung des Gleichrichters ($U_{Gmax}$), und ein Diagramm für die Abhängigkeit der Ausgangsspannung des Gleichrichters ($U_G$), normiert auf die maximale Ausgangsspannung des Gleichrichters ($U_{Gmax}$), von der Steuerspannung des Gleichrichters ($U_S$), normiert auf die maximale Steuerspannung des Gleichrichters ($U_{Smax}$).

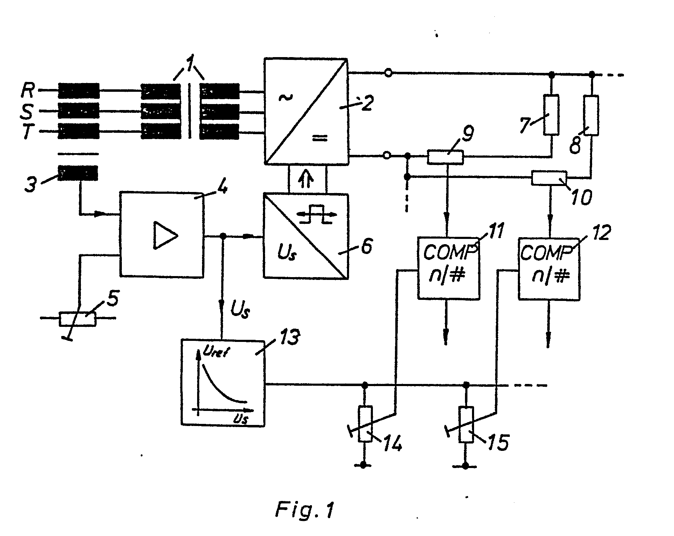

Nach dem Schaltbild der Figur 1 wird aus einem 3-Phasennetz R, S, T über einen Transformator 1 einem Vollweggleichrichter 2 mit einem gesteuerten Thyristorsatz einer Last Strom zugeführt. Der zugeführte Strom wird auf der Primärseite des Transformators 1 mit Meßwandlern 3 erfaßt und als Istwert an einen Regler 4 gegeben. Der dem Regler 4 zugeführte Sollwert ist an einem Potentiometer 5 einstellbar. Der Regler 4 liefert ein Stellsignal an ein Steuergerät 6, das Steuerimpulse an die Thyristoren des Gleichrichters 2 liefert.
Die Phasenlage der Impulse zur Phasenlage des 3-Phasennetzes
bestimmt, wann die Thyristoren gezündet werden. Auf diese
Art und Weise läßt sich die Ausgangsspannung des Gleichrichters 2 steuern. Am Ausgang des Gleichrichters 2 sind ein
oder mehr Verbraucher, bei einer ECM-Anlage ohmsch bis
ohmsch-induktive Verbraucher 7,8 angeschlossen. Der den
Verbrauchern 7,8 zugeführte Strom wird über Meßwandler 9,1o
erfaßt und an einem dem jeweiligen Verbraucher 7,8 zugeordneten Komparator 11,12 geliefert. Sofern der von den
Wandlern 9,1o den Komparatoren 11,12 zugeführte Istwert
den einem anderen Eingang zugeführten und in noch zu beschreibender Weise erzeugten Vergleichswert überschreitet,
gibt der Komperator 11,12 ein Signal zur Abschaltung des
Gleichstromrichters. Die Abschaltung kann dadurch erfolgen,
daß das Steuergerät 6 keine weiteren Steuerimpulse an den
Gleichrichter 2 liefert. Aber auch andere Möglichkeiten der
Abschaltung sind denkbar.

Gemäß der Erfindung werden die den Komparatoren 11,12 zugeführten Vergleichssignale von einem Signalgeber 13 erzeugt,
der vom Regler 4 eine Steuerspannung $U_S$ erhält, die auch
dem Steuergerät 6 für die Aussteuerung des Gleichrichters 2
zugeführt wird. Dieser Signalgeber 13 umfaßt beispielsweise
einen Rechner, in dem eine Kennlinie nachgebildet ist, die
die Abhängigkeit der Form des vom Gleichrichter 2 gelieferten
Stromes von der Steuerspannung des Gleichrichters 2 beinhaltet. Diese Abhängigkeit ist im Diagramm der Figur 3 dargestellt. Die vom Signalgeber 13 an die Komparatoren 11,12
gelieferte Vergleichsspannung $U_{ref}$ hat danach eine nicht-
lineare Abhängigkeit von der Steuerspannung $U_S$. Aus den
Diagrammen der Figuren 2 und 3 ist zu entnehmen, daß für
eine große Steuerspannung der Spitzenwert des Stromes nur
wenig von dem arithmetischen Mittelwert des Stromes abweicht
(vgl. in Fig.2 unteres Diagramm) während für eine kleine
Aussteuerung des Gleichrichters 2 der Spitzenwert des Stromes stark vom arithmetischen Mittelwert des Stromes abweicht
(vgl. in Fig. 2 oberes Stromdiagramm). Um bei mehreren
parallel geschalteten Lasten 7,8 die für die einzelnen
Lasten unterschiedliche maximale Strombelastung individuell
einstellen zu können, wird die vom Signalgeber 13 gelieferte
Referenzspannung nicht unmittelbar sondern über einstellbare Spannungsteiler 14,15 an die Komparatoren 11,12
geliefert.

Die beschriebene Einrichtung arbeitet auf folgende Art
und Weise:

Wie bei bekannten Einrichtungen liefert der Regler 4 in
Abhängigkeit von einem Soll-Istwertvergleich des in den
Transformator 1 eingespeisten Stromes ein Stellsignal an
das Steuergerät 6, das Steuerimpulse an die Steuerelektroden
der Thyristoren des Gleichrichters 2 liefert. In Abhängigkeit von der Phasenlage der Impulse zu der Phasenlage der
an den einzelnen Thyristoren anliegenden Spannung werden
die Thyristoren früher oder später leitend. In Abhängigkeit von dieser Aussteuerung ergeben sich die in Figur 2
dargestellten Stromformen.

Maßgebend für die Belastung der Elektrode und das Arbeitsergebnis ist aber nicht, wie bereits erwähnt, der Maximalwert des Arbeitsstromes sondern dessen arithmetischer
Mittelwert. Da dieser                Mittelwert für den
der Last zugeführten Arbeitsstrom aber nicht unmittelbar
augenblicklich sondern erst durch Integration über mehrere
Perioden ermittelt werden kann, läßt sich ein solcher arithmetischer Mittelwert nicht für eine Aussage verwerten, ob der
der Last zugeführte                Arbeitsstrom    nicht
zu einer Überlastung der Last führt. Um gleichwohl durch
sofortiges Abschalten des Arbeitsstroms die Last vor gefährlichem Überstrom zu schützen, wird bei der Erfindung
der momentane Arbeitsstrom mit einem von der Stromform des
Arbeitsstromes abhängigen Wert verglichen, der ein Maß für
den arithmetischen Mittelwert des Arbeitsstromes ist. Dies geschieht in der Weise, daß dem Komparator 11, 12 für den Vergleich mit den in den Meßwandlern 9, 1o festgestellten Augenblickswerten des Arbeitsstromes Vergleichswerte vorgegeben werden, die wie die Stromform des Arbeitsstromes von der Steuerspannung $U_S$ abhängen. Die nicht-lineare Abhängigkeit zwischen der Stromform des Arbeitsstromes und der Aussteuerung des Gleichrichters 2 durch die Steuerspannung $U_S$ wird für die Vergleichswerte über das Steuergerät 6 mit einer experimentell ermittelten Kennlinie im die Vergleichswerte liefernden Signalgeber 13 berücksichtigt. Bei voller Aussteuerung, also für die in Figur 2 im unteren Stromdiagramm dargestellte Stromform, ist der Pegel der Spannung $U_S$ für die Komparatoren 11, 12 kleiner als bei geringerer Aussteuerung, beispielsweise für die in Figur 2 im oberen Diagramm dargestellte Stromform. Auf diese Art und Weise ist gewährleistet, daß unabhängig von der Stromform und unter Berücksichtigung des arithmetischen Mittelwertes des Arbeitsstromes die Komparatoren 11, 12 sehr schnell auf einen plötzlichen Stromanstieg in der Last reagieren können, ohne daß es notwendig ist, zuvor den arithmetischen Mittelwert durch Berechnung zu ermitteln.

## Ansprüche

1. Einrichtung zur Überwachung des von einem Wechselstrom -,insbesondere Dreiphasennetz über einen gesteuerten Gleichrichter einer ohmschen bis ohmsch-induktiven Last zugeführten Stromes mit Meßwandlern zur Erfassung des Stromes, einem Signalgeber zur Erzeugung eines Vergleichswertes für den Strom und einem Komparator, der ein Abschaltsignal liefert, wenn der zu überwachende Strom den vorgegebenen Vergleichswert des Signalgebers überschreitet,

d a d u r c h   g e k e n n z e i c h n e t ,
daß der Signalgeber(13) den vorgegebenen Vergleichswert nach einer Kennlinie für die Abhängigkeit der Form des der Last(7,8)zugeführten Stromes von der Aussteuerung des Gleichrichters(2)erzeugt.

2. Einrichtung nach Anspruch 1,
d a d u r c h   g e k e n n z e i c h n e t ,
daß bei mehreren Lasten(7,8)für jede Last(7,8)ein Komparator(11,12)vorgesehen ist

3. Einrichtung nach Anspruch 2,
d a d u r c h   g e k e n n z e i c h n e t ,
daß der Ausgang des Signalgebers(13)über ein Korrekturglied (14,15)mit dem jeweiligen Komparator(11,12)verbunden ist, mit dem das Niveau des Vergleichswertes einstellbar ist.

Fig.1

$U_G = 0,25\ U_{Gmax}$

$U_G = 0,33\ U_{Gmax}$

$U_G = 0,67\ U_{Gmax}$

$U_G = 1,00\ U_{Gmax}$

Fig.2

Fig.3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 056 784 (A.G. FÜR INDUSTRIELLE ELEKTRONIK AGIE) * Ansprüche 3,7; Seite 6, Zeile 26 - Seite 7, Zeile 25; Figur 2 * | 1 | H 02 H 7/00 |
| D,A | DE-A-3 032 757 (AEG-ELOTHERM GMBH) * Anspruch 1; Figur * | 1 | |

RECHERCHIERTE
SACHGEBIETE (Int. Cl.4)

H 02 H 7/00
H 02 H 7/125

Der vorliegende Recherchenbericht wurde für alle Patentansprüche erstellt.

| Recherchenort BERLIN | Abschlußdatum der Recherche 26-04-1985 | Prüfer LEMMERICH J |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82